# EUROPEAN PATENT SPECIFICATION

(11) **EP 2 142 134 B1**
(45) Date of publication and mention of the grant of the patent: **29.09.2010**
(21) Application number: 08745328.8
(22) Date of filing: 09.04.2008
(51) Int. Cl.: A61C 7/14

(54) **CERAMIC ORTHODONTIC BRACKET WITH IMPROVED DEBONDING CHARACTERISTICS**
KERAMISCHE ZAHNSPANGE MIT VERBESSERTEN LÖSEEIGENSCHAFTEN
BRACKET ORTHODONTIQUE EN CÉRAMIQUE AVEC CARACTÉRISTIQUES DE DÉTACHEMENT PERFECTIONNÉES

(30) Priority: 30.04.2007 US 914904 P
(43) Date of publication of application: 13.01.2010
(73) Proprietor: 3M Innovative Properties Company, Saint Paul, MN 55133-3427 (US)
(72) Inventor: POSPISIL, Jirina V., Saint Paul, Minnesota 55133-3427 (US)
(74) Representative: Voortmans, Gilbert J.L.
(86) International application number: PCT/US2008/059695
(87) International publication number: WO 2008/134209

(56) References cited:
- US-A- 4 216 583
- US-A- 5 158 452
- US-A- 5 439 379
- US-A1- 2005 170 308

## Description

### Background of the Invention

### 1. Field of the Invention

This invention relates to a ceramic bracket that is used during orthodontic treatment to move a patient's teeth to desired positions. More particularly, the present invention relates to a ceramic orthodontic bracket having structure for facilitating removal of the bracket at the conclusion of treatment.

### 2. Description of the Related Art

Orthodontic treatment is directed to movement of malpositioned teeth to improved positions in the oral cavity. Orthodontic treatment can greatly enhance the patient's facial appearance, especially in areas near the front of the patient's mouth. Orthodontic treatment can also improve the patient's occlusion so that the teeth function better with each other during mastication.

One type of orthodontic treatment involves the use of a set of appliances and archwires that are commonly known collectively as "braces". During treatment, tiny slotted appliances known as brackets are affixed to the patient's anterior, cuspid and bicuspid teeth, and an archwire is placed in the slot of each bracket. The archwire forms a track to guide movement of the teeth to orthodontically correct positions. Ends of the archwire are often received in the passages of small appliances known as buccal tubes that are affixed to the patient's molar teeth.

In the past, orthodontic brackets were commonly welded or brazed to bands that were placed around the teeth. Today, orthodontic brackets are often bonded directly to the enamel surface of the teeth by an adhesive. Once treatment has been completed, the archwire is removed from the slots of the brackets and each bracket is then removed from the associated tooth.

Orthodontic brackets are typically made of metal, ceramic or plastic. Improved ceramic brackets are described in U.S. Patent Nos. 5,439,379 and 5,366,372. The ceramic brackets described in those patents have two sections that are spaced apart from each other by a channel. In some of the embodiments described in those patents, the bracket sections are connected to each other by a line of weakness that comprises a thin web of material that lies along the bottom of the channel. The web is constructed to fracture during debonding of the bracket from the tooth.

The brackets that are shown in certain embodiments described in U.S. Patent Nos. 5,439,379, upon which prior art the two-part form of claim 1 is based, and 5,366,372 are debonded at the conclusion of treatment by using a hand instrument to urge the sections in directions toward each other until the thin web of material fractures. Hand instruments that are especially useful for debonding such brackets are described in those patents as well as in U.S. Patent No. 6,474,988 and published U.S. patent application No. 2006/0127835. The hand instruments include wall portions for engaging the sides of the bracket so that the sections of the bracket pivot toward each other and away from the tooth surface when handles of the hand instrument are squeezed together.

However, orthodontic treatment may lead to increased tooth sensitivity, especially if the course of treatment has extended for a period of several months. The removal of orthodontic brackets at the conclusion of treatment often results in the application of a force on the adjacent tooth surface. This force may be relatively small but still considered painful by some patients with sensitive teeth. As can be appreciated, any improvement in reducing pain associated with debonding of orthodontic brackets would be considered an advantage.

### Summary of the Invention

The present invention is directed toward a ceramic orthodontic bracket having structure that facilitates detachment of the bracket at the conclusion of treatment. The ceramic bracket includes mesial and distal sections that are detached from the tooth by pivotal movement, and the force needed to initiate pivotal movement is significantly less than the force needed to initiate pivotal movement of mesial and distal sections of ceramic brackets previously known in the art. Yet, the ceramic orthodontic bracket of the present invention can safely withstand the forces normally encountered during the course of orthodontic treatment without substantial risk of inadvertent detachment from the patient's tooth before treatment has been concluded.

In more detail, the present invention is directed toward a ceramic orthodontic bracket that comprises a mesial section and a distal section. The mesial section and the distal section each include an external surface, and the external surface of the mesial section and the distal section together present a base for bonding the bracket to a tooth. The bracket also includes an archwire slot extending across the mesial section and the distal section in a generally mesial-distal direction and an elongated channel that extends in a generally occlusal-gingival direction between the mesial section and the distal section. The channel has a depth in a lingual direction that is greater than the lingual depth of the archwire slot. The bracket further includes a line of weakness extending between the mesial section and the distal section lingually of the channel and extending along the length of the channel. The line of weakness enables the bracket to be debonded from a tooth by pivoting the mesial section and the distal section about a reference axis extending generally parallel to the longitudinal axis of the channel. The bracket additionally includes a recess that extends between the external surface of the mesial section and the distal section in a direction generally parallel to the channel. The recess has a bottom surface that is spaced in a facial direction from adjacent regions of the external surface of the mesial section and the distal section. The base has an overall width in a mesial-distal direction and an overall height in an occlusal-gingival direction, and the ratio of the overall width to the overall height is less than about 0.95.

As will be explained in more detail below, the relatively small aspect ratio of the bracket (i.e., the ratio of its overall width to its overall height) increases the likelihood that the configuration of the bracket's base will precisely match the configuration of the patient's tooth surface for a large number of patients. The matching configurations of the bracket base and the tooth surface may help to improve the strength of the adhesive bond between the bracket and the tooth. As a result, the bracket is less likely to unintentionally detach from the tooth during the course of treatment as might otherwise occur, for example, when the patient bites into a relatively hard item of food.

Further details of the invention are defined in the features of the claims.

### Brief Description of the Drawings

Fig. 1 is a perspective view of a ceramic orthodontic bracket according to one embodiment of the invention, looking at the bracket toward its facial, occlusal and distal sides;
Fig. 2 is a front elevational view of the bracket shown in Fig. 1, looking at the bracket toward its facial side;
Fig. 3 is a side elevational view of the bracket shown in Figs. 1 and 2, looking at the bracket toward its mesial side;
Fig. 4 is a bottom view of the bracket shown in Figs. 1-3, looking at the bracket toward its occlusal side;
Fig. 5 is a rear elevational view of the bracket shown in Figs. 1-4, looking at the bracket toward its lingual side;
Fig. 6 is a reduced, fragmentary bottom view of an exemplary hand instrument along with the bracket shown in Figs. 1-5, wherein jaws of the hand instrument have been placed on opposite sides of the bracket as might occur during a debonding procedure; and
Fig. 7 is a rear elevational view of a prior art ceramic orthodontic bracket, looking in a direction toward its lingual side.

### Definitions

"Mesial" means in a direction toward the center of the patient's curved dental arch.

"Distal" means in a direction away from the center of the patient's curved dental arch.

"Occlusal" means in a direction toward the outer tips of the patient's teeth.

"Gingival" means in a direction toward the patient's gums or gingiva.

"Facial" means in a direction toward the patient's cheeks or lips.

"Lingual" means in a direction toward the patient's tongue.

### Detailed Description of the Preferred Embodiments

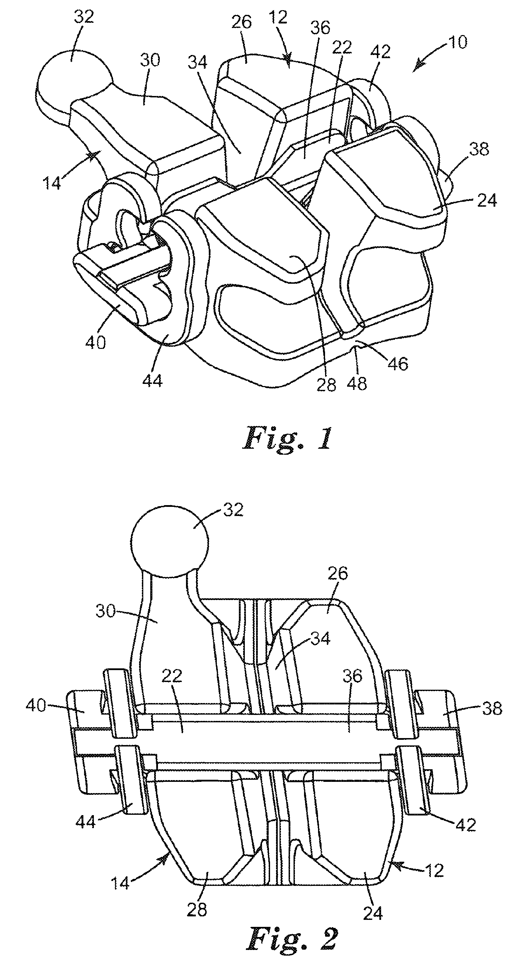

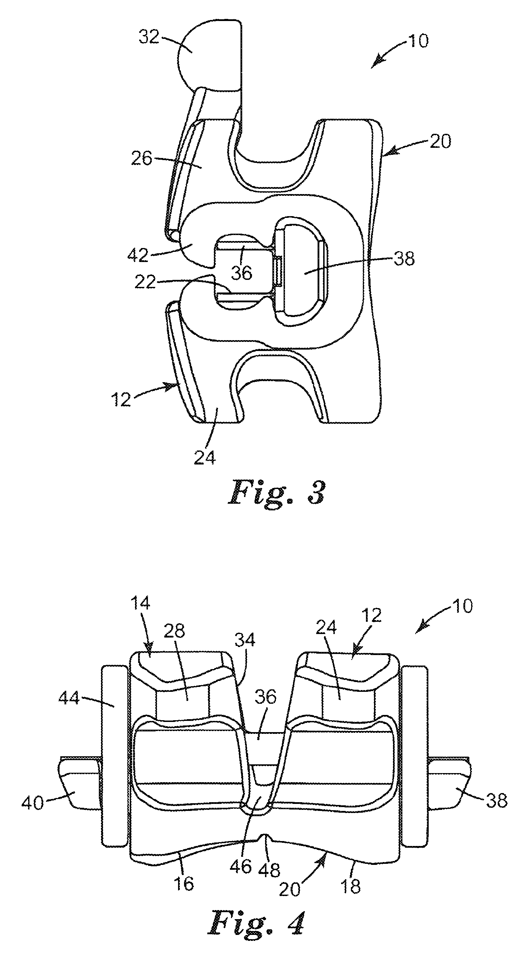

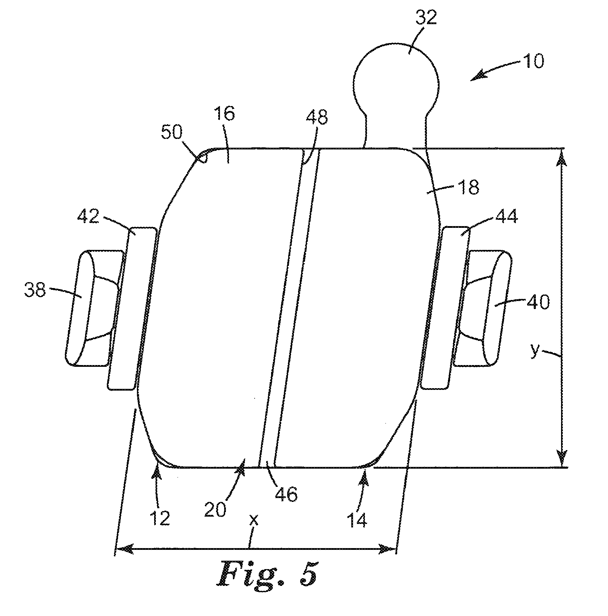

A ceramic orthodontic bracket constructed in accordance with one embodiment of the present invention is illustrated in Figs. 1-6 and is broadly designated by the numeral 10. The bracket 10 includes a mesial section 12 and a distal section 14 that is spaced from the mesial section 12. The mesial section 12 includes an external surface 16 and the distal section 14 includes an external surface 18 as shown, for example, in Figs. 4 and 5.

The external surfaces 16, 18 together present a base 20 that faces in a lingual direction for bonding the bracket 10 to the enamel surface of a patient's tooth. Preferably, the base 20 has a concave configuration with a compound contour that presents a curved appearance in a reference plane perpendicular to a central mesial-distal reference axis of the bracket 10 as well as in a reference plane perpendicular to a central occlusal-gingival reference axis of the bracket 10. Preferably, the concave compound contour of the base 20 precisely matches the convex compound contour of the adjacent portion of the tooth surface to which the bracket 10 is bonded during the course of treatment.

Optionally, the base 20 includes a number of particles for enhancing the adhesive bond between the base 20 and the enamel surface of the patient's tooth. Suitable particles include tiny shards of aluminum oxide, such as No. 150 grit size or No. 220 grit size aluminum oxide particles designated "38 Alundum" Norton brand abrasives from Saint-Gobian Abrasives, Inc. These particles preferably protrude outwardly at various angles to present undercut regions. The undercut regions provide pockets where the adhesive establishes a mechanical interlock with the base 20 once the adhesive has hardened.

Optionally, the particles are omitted from all or a portion of the perimeter of the base 20. As one example, the particles may be omitted from a 0.25 mm wide edge portion that extends around the entire perimeter of the base 20. As another example, the particles may be omitted from edge portions in an asymmetric pattern as described in U. S. Patent No. 5,746,594 (Jordan et al.). For instance, the particles may be omitted along a mesial edge of the mesial section 12 and a distal edge of the distal section 14.

Methods for affixing ceramic particles to ceramic bodies are described in U.S. Patent No. 5,108,285 (Tuneberg). The particles may be affixed to the sections 12, 14 by embedding the particles in a glass frit. Other types of particles and methods for affixing particles to ceramic bodies are described in U.S. Patent Nos. 5,071,344 (Wong et al.) and 5,295,823 (Farzin-Nia).

An elongated archwire slot 22 extends across the mesial section 12 and the distal section 14 in a generally mesial-distal direction. The archwire slot 22 is located between an occlusal tiewing 24 and a gingival tiewing 26 of the mesial section 12 and an occlusal tiewing 28 and a gingival tiewing 30 of the distal section 14. Optionally, and as depicted in the drawings, a hook 32 having an enlarged, rounded head is integrally connected to the outer end of the gingival tiewing 30 of the distal section 14 and extends in a gingival direction away from the archwire slot 22.

An elongated channel 34 extends in a generally occlusal-gingival direction between the mesial section 12 and the distal section 14. The channel 34 has a depth in a lingual direction that is greater than the depth of the archwire slot 22 in a lingual direction. As such, the distance between the bottom or lingual side of the channel 34 and the base 20 is less than the distance between the bottom or lingual side of the archwire slot 22 and the base 20. The bottom of the channel 34 has a radius of curvature that is in the range of about 0.1 mm to about 0.15 mm and more preferably is about 0.13 mm. As illustrated in Fig. 2, the channel 34 has a center portion as well as two end portions that extend at a slight angle relative to the center portion.

Preferably, and as shown in Figs. 1-6, the archwire slot 22 is defined on its occlusal, lingual and gingival sides by an archwire slot liner 36. The archwire slot liner 36 is preferably made of a metallic material such as austenitic stainless steel. An example of a suitable material is Type 316L stainless steel having a thickness of about 0.05 mm.

The archwire slot liner 36 is preferably bonded to the mesial and distal sections 12, 14 by a braze material such as an alloy comprising silver, copper and at least 1.5% by weight titanium, based on the entire weight of the brazing alloy. Suitable brazing alloys are described in pending U.S. patent application No. US 2008/081309 entitled "ORTHODONTIC BRACKET WITH BRAZED ARCHWIRE SLOT LINER" (Wyllie II, et al.). Other methods of attaching the archwire slot liner 36 to the sections 12, 14 are also possible, including the use of an adhesive, a mechanical interlock, an interference fit or any combination of the foregoing.

The bracket 10 also includes a mesial post 38 and a distal post 40 that are integrally connected to the mesial section 12 and the distal section 14 respectively. The posts 38, 40 extend outwardly in opposite directions away from each other. Preferably, and as shown, each post 38, 40 extends along a reference axis that is parallel to the longitudinal axis of the archwire slot 22. As illustrated for example in Figs. 3 and 4, the posts 38, 40 are located in a lingual direction relative to the archwire slot 22.

Each of the posts 38, 40 includes an outermost head and a neck that integrally interconnects the head and the adjacent section 12, 14. The archwire slot liner 36 includes a mesial extension that extends across the facial side of the mesial post 38 and a distal extension that extends across the facial side of the distal post 40. The mesial post 38 extends through a mesial spring clip 42 and the distal post 40 extends through a distal spring clip 44, and each clip 42, 44 has an opening that faces in a facial direction.

The clips 42, 44 comprise a latch for releasably retaining an archwire (not shown) in the archwire slot 22. The clips 42, 44 are shown in their normal, relaxed orientation in the drawings, but have opposed arm portions that are movable away from each other in order to admit an archwire into the archwire slot 22 when desired. To this end, the arm portions include outer, curved edges that extend along the facial side of the sections 12, 14. The opening of the clips 42, 44 enlarges to admit an archwire into the archwire slot 22 when an archwire is urged against the outer curved edges.

The clips 42, 44 are made of a resilient material such as alloys of nitinol or beta-titanium. The clips 42, 44 have inherent resiliency to enable the arm portions of the clips 42, 44 to move apart from each other a sufficient distance to permit passage of the archwire into the archwire slot 22. Subsequently, this inherent resiliency enables the arm portions to spring back toward each other and toward their normal, relaxed configuration as shown in the drawings in order to thereafter retain the archwire in the archwire slot 22.

The clips 42, 44 are sufficiently stiff to retain the archwire in the archwire slot 22 during the course of treatment so long as the forces exerted by the archwire on the bracket 10 are below a certain minimum value in a generally facial direction (more particularly in a direction opposite to the direction of insertion of the archwire into the archwire slot 22). However, whenever the forces exerted by the archwire on the bracket 10 in the same direction are greater than the minimum value, as might occur when unexpectedly high forces are encountered, the arm portions move apart from each other to open the clips 42, 44 and release the archwire from the archwire slot 22.

The latch, comprising the spring clips 42, 44, preferably releases the archwire from the archwire slot 22 in a generally facial direction whenever the archwire exerts a force in the same direction on the bracket 10 that is in the range of about 0.1 kg to about 5 kg, more preferably in the range of about 0.2 kg to about 2.5 kg, and most preferably in the range of about 0.34 kg to about 1.4 kg. Preferably, the minimum value is sufficiently high to prevent the archwire from unintentionally releasing from the archwire slot 22 during the normal course of orthodontic treatment. As such, the archwire can exert forces on the bracket 10 that are sufficient to carry out the treatment program and move the associated teeth as desired.

Preferably, the minimum value for self-release (i.e., self-opening) of the latch is substantially less than the force required in the same direction to debond the bracket 10 from the associated tooth. The minimum value for self-release of the latch is preferably less than about one-half of the force required in the same direction to debond the bracket from the associated tooth. For example, if the expected bond strength of the adhesive bond between the bracket 10 and the associated tooth is 7.2 kg in a facial direction, the latch is constructed to self-release the archwire whenever the archwire exerts a force in the same facial direction on the bracket 10 that is somewhat greater than about 3.6 kg.

To determine the force to release the latch, a section of archwire is selected having an area in longitudinally transverse sections that is complemental to (i.e., substantially fills) the cross-sectional area of the archwire slot 22. Next, a sling is constructed and is connected to the archwire section at locations closely adjacent, but not in contact with, the heads of the posts 38, 40. Optionally, the sling is welded or brazed to the archwire section. Next, the sling is pulled away from the bracket 10 while the bracket 10 is held in a stationary position, taking care to ensure that the longitudinal axis of the archwire section does not tip relative to the longitudinal axis of the archwire slot 22. The force to release the latch may be determined by the use of an Instron testing apparatus connected to the sling, using a crosshead speed of 0.5 in/min (1.3 cm/min). Alternatively, a shaker apparatus (such as Model 300 from APS Dynamics of Carlsbad, California) may be used along with a force transducer (such as Model 208C01 from PCB of Buffalo, New York) to measure the force.

Other aspects of the clips 42, 44, including methods of manufacture, are described in published U.S. patent application No. 2006/0147868 (Lai et al.). Optional aspects of the clips 42, 44 are described in U.S. Patent No. 7,014,460 (Lai et al.). Additional aspects of the posts 38, 40, including other aspects are related to the construction of the clips 42, 44, are described in published U.S. patent application No. 2006/0024635 (Lai). Other examples of clips and latches are described in U.S. Patent No. 6,302,688 (Jordan et al.) and 6,582,226 (Jordan et al.) as well as in published U.S. patent application No. 2006/0172249 (Lai et al.).

A line of weakness extends beneath lingual portions of the mesial and distal sections 12, 14, and lies in a lingual direction relative to the channel 34. In the illustrated embodiment, the line of weakness comprises a relatively thin frangible web 46 that integrally connects a lingual portion of the mesial section 12 to a lingual portion of the distal section 14. The web 46 extends in a generally occlusal-gingival direction that preferably is parallel to the longitudinal axis of the center portion of the channel 34 and is directly adjacent the bottom of the channel 34.

Other lines of weakness are also possible. For example, the mesial section and the distal section may be manufactured as initially separate components and the line of weakness may comprise a section of adhesive material that bonds the mesial and distal sections together. The line of weakness may also comprise an interference-fit coupling between the mesial and distal sections that bends or fractures during a debonding procedure.

The bracket 10 also includes an elongated recess 48 that extends between the external surface 16 of the mesial section 12 and the external surface 18 of the distal section 14. The recess 48 has a bottom or facial-most surface that is spaced in a facial direction away from adjacent regions of the external surfaces 16, 18. As one option, and as depicted in the drawings, the recess 48 has a generally semi-circular cross-sectional configuration in reference planes perpendicular to its longitudinal axis. An example of a suitable radius for the recess 48 in cross-sectional view is about 0.8 mm. However, other cross-sectional configurations are also possible, such as a generally "V"-shaped configuration. The recess 48 extends in a generally occlusal-gingival direction that preferably is parallel to the longitudinal axis of the web 46 and is directly adjacent the lingual side of the web 46.

The web 46 has a thickness in a facial direction that is sufficiently small to enable the bracket 10 to be debonded from a tooth by pivoting at least one of the mesial and distal sections 12, 14 about a reference axis extending generally parallel to the longitudinal axis of the channel 34. Examples of a suitable thickness of the web 46, when measured in a facial direction adjacent the middle of the center portion of the channel 34, include values in the range of about 0.36 mm to about 0.66 mm, depending upon other dimensions of the bracket 10 including the size of the archwire slot.

An exemplary hand instrument 60 for detaching the bracket 10 from a patient's tooth 10 is illustrated in Fig. 6. The hand instrument 60 includes a first jaw 62 and a second jaw 64 that is pivotally connected to the first jaw 62. The hand instrument 60 also includes an elongated blade 70 that extends along a path between the jaws 62, 64.

Only the outer tips of the jaws 62, 64 and the outer tip of the blade 70 are depicted in Fig. 6, and a more detailed description of the hand instrument 60 is set out in pending U.S. patent application No US 2008/0153051 entitled "ORTHODONTIC HAND INSTRUMENT FOR DETACHING BRACKETS FROM TEETH" (Hart et al.). The outer tip of the first jaw 62 includes a first contact pad 66 and the outer tip of the second jaw 64 includes a contact pad 68. Both of the contact pads 66, 68 are elongated and extend in directions parallel to each other and parallel to the pivot axis of the pivot (not shown) interconnecting the jaws 62, 64.

When a practitioner desires to remove the bracket 10 from a tooth, the first contact pad 66 is placed in contact with the mesial side of the mesial clip 42 and the second contact pad 68 is placed in contact with the distal side of the distal clip 44. Next, as handles of the hand instrument 60 are squeezed together, the contact pads 66, 68 are urged toward each other in a manner such that one or both of the sections 12, 14 pivot(s) toward each other in an arc and about a reference axis that is generally parallel to the longitudinal axis of the channel 34. As one or both of the sections 12, 14 pivot away from the orientations illustrated in Fig. 6, the web 46 fractures and thereby enables one or both of the external surfaces 16, 18 to detach and move away from underlying areas of the patient's tooth. In instances where only one but not both of the sections 12, 14 detach from underlying areas of the tooth, the hand instrument 60 may be rocked by the user to detach the remaining section 12, 14.

Additional aspects relating to ceramic brackets with lines of weakness such as frangible webs and other structure are described in U.S. Patent Nos. 5,439,379 and 5,366,372.

The base 20 has an overall width in a mesial-distal direction and an overall height in an occlusal-gingival direction. In Fig. 5, the overall width of the base 20 in a mesial-distal direction is designated by the letter "x" while the overall height of the base 20 in an occlusal-gingival is designated by the letter "y". The ratio of the overall width of the base 20 to the overall height of the base 20, also known as the aspect ratio, is preferably less than about 0.95, more preferably less than about 0.90 and most preferably less than about 0.85.

Preferably, the overall width is less than about 3.6 mm. In general, brackets such as brackets 10 that are constructed for anterior teeth of the patient's lower dental arch may be narrower than other brackets due to the relatively narrow overall mesial-distal width of such teeth and as a result the aspect ratio of those brackets may be less than about 0.7.

The base also preferably has four smoothly-curved corners with a relatively large radius. An exemplary corner is designated by the numeral 50 in Fig. 5. Preferably, each of the four corners has a radius of curvature in the plane of the base 20 that is about 1.0 mm.

The base 20 has an overall area that is preferably in the range of about 7.5 mm² to about 11.5 mm². The overall shape of the base 20 (including the aspect ratio, the area and the corners with a relatively large radius of curvature) combine to facilitate placement and bonding of the bracket 10 to the patient's tooth at the beginning of treatment as well as debonding of the bracket 10 from the patient's tooth at the conclusion of treatment.

More particularly, the relatively small aspect ratio of the bracket 10 of the present invention is an advantage during a debonding procedure because less force is needed to urge the sections 12, 14 in directions toward each other. For example, and with reference to Fig. 6, if a bracket were constructed similar to bracket 10, and such hypothetical bracket had a base with an area identical to the area of bracket 10 but with a larger aspect ratio, the overall mesial-distal width of the base of such a bracket would be larger than the overall width of base 20. As a result, a larger force (as can be represented by the larger resulting moment arm) is needed to overcome the forces of adhesion and pivot the mesial and distal sections than the force necessary to pivot the mesial and distal sections 12, 14 of the bracket 10 of the present invention.

With respect to the preferred embodiment illustrated in the drawings, the location of the clips 42, 44, being outboard of the mesial and distal sections 12, 14 respectively, provides additional benefits. The thickness of the clips 42, 44 advantageously helps to increase the leverage provided by the jaws 62, 64 during a debonding procedure. Furthermore, the spacing between the posts 38, 40 enhances rotational control over movement of the associated tooth in instances when the posts 38, 40 are in contact with the archwire.

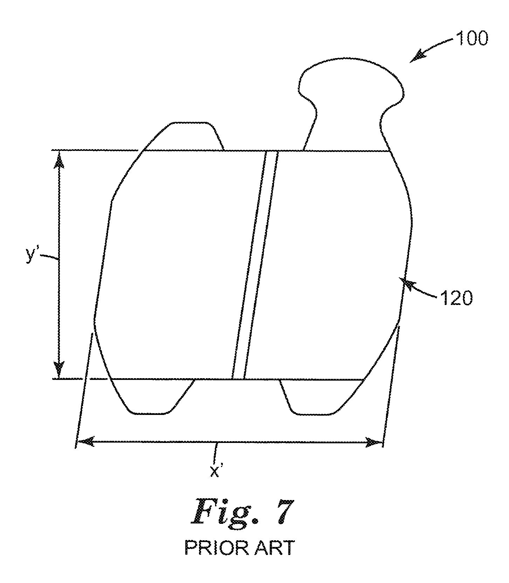

Fig. 7 is an illustration of a base 20 of an exemplary ceramic orthodontic bracket 100 known in the art. In Fig. 7, the overall width of the base 120 in a mesial-distal direction is designated by the letter "x'" while the overall height of the base 120 in an occlusal-gingival is designated by the letter "y"'. The aspect ratio of the prior art bracket base 120 illustrated in Fig. 7 is approximately 1.3, while the aspect ratio of the base 20 shown in Fig. 5 according to the present invention is about 0.85. Aspect ratios of other similar prior art brackets, but constructed for the relatively narrow anterior teeth of the lower dental arch, are known with aspect ratios of about 1.0.

In addition, the smaller aspect ratio of the brackets 10 of the present invention is an advantage due to the characteristics of the compound contour of typical human adult teeth. Such teeth usually have a radius of curvature that is greater in central reference planes perpendicular to a mesial-distal reference axis compared to the radius of curvature in central reference planes perpendicular to an occlusal-gingival reference axis. As a consequence, the risk of substantial misfit between the base and any given tooth that may be encountered in a particular instance is less than might otherwise occur in comparison to known prior art ceramic brackets.

Moreover, the smoothly curved corners 50 of the base 20 with a relatively large radius of curvature facilitate positioning of the bracket 10 on the patient's tooth. If, for example, the patient's tooth surface is less convex (i.e., has a flatter configuration) than expected, the base of the bracket will often contact the tooth surface at the four corners of the base. By providing corners 50 with a relatively large radius of curvature, it is less likely that the base 20 will tend to rock or "hang" on the corners.

Another advantage of the present invention is that removal of adhesive flash is facilitated. It has been observed that more flash tends to be extruded along occlusal and gingival edges of the base of brackets having a compound contoured base as compared to the amount of flash extruded from mesial and distal edges of the base of such brackets. The smaller aspect ratio of the brackets of the present invention leads to less, if any, projection or overhang of the tiewings 24, 26, 28, 30 past the perimeter of the base. As a result, it is easier to access the adhesive flash along the occlusal and gingival edges of the base with a hand instrument such as a scaler.

The bracket 10 (including the sections 12, 14, the tiewings 24, 26, 28, 30, the hook 32, the posts 38, 40 and the web 46) are preferably made of a transparent or translucent ceramic material such as polycrystalline translucent aluminum oxide. Examples of suitable polycrystalline translucent ceramic materials are described in U.S. Patent No. 6,648,638 (Castro et al.) and include aluminum oxide ceramic materials having an average grain size of no greater than 1.0 micron. Other ceramic materials are also possible, including the polycrystalline ceramic materials described in U.S. Patent No. 4,954,080 (Kelly et al.) and single crystal ceramic materials (such as described in U.S. Patent No. 4,681,538 to DeLuca et al.).

Those skilled in the art will recognize that other options, alternatives and additions are possible to the orthodontic brackets set out above without departing from the essence of our invention. Consequently, the invention should not be deemed limited to the specific embodiments described in detail above, but instead only by a fair scope of the claims.

## Claims

1. A ceramic orthodontic bracket (10) comprising:
a mesial section (12);
a distal section (14), wherein the mesial section and the distal section each include an external surface (16, 18), and wherein the external surface (16, 18) of the mesial section (12) and the distal section together present a base (20) for bonding the bracket to a tooth;
an archwire slot (22) extending across the mesial section (12) and the distal section (14) in a generally mesial-distal direction;
an elongated channel (34) extending in a generally occlusal-gingival direction between the mesial section (12) and the distal section (14), the channel (34) having a depth in a lingual direction that is greater than the lingual depth of the archwire slot;
a line of weakness extending between the mesial section (12) and the distal section (14) lingually of the channel and extending along the length of the channel (34), the line of weakness enabling the bracket to be debonded from a tooth by pivoting the mesial section (12) and the distal section (14) about a reference axis extending generally parallel to the longitudinal axis of the channel; and
a recess (48) extending between the external surface (16, 18) of the mesial section (12) and the distal section in a direction generally parallel to the channel, the recess (48) having a bottom surface that is spaced in a facial direction from adjacent regions of the external surface of the mesial section and the distal section,
**characterized in that** the base (20) has an overall width in a mesial-distal direction and an overall
height in an occlusal-gingival direction, and wherein the ratio of the overall width to the overall height is less than about 0.95.

2. A ceramic orthodontic bracket (10) according to claim 1 wherein the ratio of the overall width to the overall height is less than about 0.90.

3. A ceramic orthodontic bracket (10) according to claim 1 wherein the overall width is less than about 3.6 mm.

4. A ceramic orthodontic bracket (10) according to claim 1 wherein the mesial section (12) and the distal section (14) each include a pair of tiewings having an overall height in an occlusal-gingival direction that is no greater than the overall height of the base in an occlusal-gingival direction.

5. A ceramic orthodontic bracket (10) according to claim 1 wherein the channel (34) has a generally "V"-shaped cross-sectional configurations in reference planes perpendicular to its longitudinal axis.

6. A ceramic orthodontic bracket (10) according to claim 5 wherein the channel (34) includes a bottom surface having a radius of curvature in the range of about 0.1 mm to about 0.15 mm.

7. A ceramic orthodontic bracket (10) according to claim 1 wherein the recess (48) has a longitudinal axis and a generally semi-circular cross-sectional configuration in reference planes perpendicular to its longitudinal axis.

8. A ceramic orthodontic bracket (10) according to claim 1 wherein the bracket further includes a mesial clip (42) connected to the mesial section (12) and a distal clip (44) connected to the distal section, wherein the mesial clip (42) and the distal clip (44) are operable to releasably retain an archwire in the archwire slot (22).

9. A ceramic orthodontic bracket (10) according to claim 1 wherein the bracket further includes a mesial post (38) extending outwardly from the mesial section in a generally mesial direction, a distal post (40) extending outwardly from the distal section in a generally distal direction, a mesial clip (42) connected to the mesial post and a distal clip (44) connected to the distal post, wherein the mesial clip (42) and the distal clip (44) releasably retain an archwire in the archwire slot (22).

10. A ceramic orthodontic bracket (10) according to claim 1 wherein the external surface of the mesial section (12) and the distal section (14) each include at least one corner having a radius of curvature in the plane of the base of about 1.0 mm.

11. A ceramic orthodontic bracket (10) according to claim 1 wherein the base includes a number of particles comprising shards of ceramic material.

12. A ceramic orthodontic bracket (10) according to claim 1 wherein the line of weakness comprises a frangible web.

13. A ceramic orthodontic bracket (10) according to claim 12 wherein the frangible web includes a portion having a thickness in a facial direction that is in the range of about 0.36 mm to about 0.66 mm.

14. A ceramic orthodontic bracket (10) according to claim 12 wherein the frangible web has a thickness in a facial direction that is less than about 0.66 mm.

15. A ceramic orthodontic bracket (10) according to claim 1 wherein the bracket comprises polycrystalline translucent aluminum oxide having an average grain size of no greater than about 1.0 micron.

## Patentansprüche

1. Keramische Zahnspange (10), die Folgendes umfasst: einen mesialen Abschnitt (12); einen distalen Abschnitt (14), worin der mesiale Abschnitt und der distale Abschnitt jeweils eine Außenfläche (16, 18) aufweisen und worin die Außenfläche (16, 18) des mesialen Abschnitts (12) und des distalen Abschnitts zusammen einen Boden (20) zur Befestigung der Spange an einem Zahn darstellen; einen Bogendrahtschlitz (22), der sich über den mesialen Abschnitt (12) und den distalen Abschnitt (14) in einer allgemein mesial-distalen Richtung erstreckt; einen länglichen Kanal (34), der sich in einer allgemein okklusal-gingivalen Richtung zwischen dem mesialen Abschnitt (12) und dem distalen Abschnitt (14) erstreckt, wobei der Kanal (34) eine Tiefe in einer lingualen Richtung aufweist, die größer ist als die linguale Tiefe des Bogendrahtschlitzes; eine Schwächelinie zwischen dem mesialen Abschnitt (12) und dem distalen Abschnitt (14) lingual vom Kanal, die sich über die Länge des Kanals (34) erstreckt, wobei die Schwächelinie es der Spange ermöglicht, durch Schwenken des mesialen Abschnitts (12) und des distalen Abschnitts (14) um eine Bezugsachse, die sich allgemein parallel zur Längsachse des Kanals erstreckt, von einem Zahn gelöst zu werden; und eine Vertiefung (48), die sich zwischen der Außenfläche (16, 18) des mesialen Abschnitts (12) und des distalen Abschnitts in einer allgemein parallel zum Kanal verlaufenden Richtung erstreckt, wobei die Vertiefung (48) eine Bodenfläche aufweist, die in fazialer Richtung von benachbarten Regionen der Außenfläche des mesialen Abschnitts und des distalen Abschnitts beabstandet ist, **dadurch gekennzeichnet, dass** der Boden (20) eine Gesamtbreite in mesial-distaler Richtung und eine Gesamthöhe in okklusal-gingivaler Richtung aufweist und worin das Verhältnis von Gesamtbreite zu Gesamthöhe weniger als ca. 0,95 beträgt.

2. Keramische Zahnspange (10) nach Anspruch 1, worin das Verhältnis von Gesamtbreite zu Gesamthöhe weniger als ca. 0,90 beträgt.

3. Keramische Zahnspange (10) nach Anspruch 1, worin die Gesamtbreite weniger als ca. 3,6 mm beträgt.

4. Keramische Zahnspange (10) nach Anspruch 1, worin der mesiale Abschnitt (12) und der distale Abschnitt (14) jeweils ein Paar Zugflügel mit einer Gesamthöhe in einer okklusal-gingivalen Richtung aufweisen, die nicht größer ist als die Gesamthöhe des Bodens in einer okklusal-gingivalen Richtung.

5. Keramische Zahnspange (10) nach Anspruch 1, worin der Kanal (34) eine allgemein "V"-förmige Querschnittskonfiguration in Bezugsebenen lotrecht zur Längsachse aufweist.

6. Keramische Zahnspange (10) nach Anspruch 5, worin der Kanal (34) eine Bodenfläche mit einem Krümmungsradius im Bereich von ca. 0,1 mm bis ca. 0,15 mm aufweist.

7. Keramische Zahnspange (10) nach Anspruch 1, worin die Vertiefung (48) eine Längsachse und eine allgemein halbkreisförmige Querschnittskonfiguration in Bezugsebenen lotrecht zur Längsachse aufweist.

8. Keramische Zahnspange (10) nach Anspruch 1, worin die Spange ferner eine mesiale Klammer (42), die mit dem mesialen Abschnitt (12) verbunden ist, und eine distale Klammer (44), die mit dem distalen Abschnitt verbunden ist, aufweist, worin die mesiale Klammer (42) und die distale Klammer (44) einen Bogendraht lösbar im Bogendrahtschlitz (22) halten können.

9. Keramische Zahnspange (10) nach Anspruch 1, worin die Spange ferner einen mesialen Pfosten (38), der sich vom mesialen Abschnitt in einer allgemein mesialen Richtung nach außen erstreckt, einen distalen Pfosten (40), der sich vom distalen Abschnitt in einer allgemein distalen Richtung nach außen erstreckt, eine mesiale Klammer (42), die mit dem mesialen Pfosten verbunden ist, und eine distale Klammer (44), die mit dem distalen Pfosten verbunden ist, aufweist, worin die distale Klammer (42) und die distale Klammer (44) einen Bogendraht lösbar im Bogendrahtschlitz (22) festhalten.

10. Keramische Zahnspange (10) nach Anspruch 1, worin die Außenfläche des mesialen Abschnitts (12) und des distalen Abschnitts (14) jeweils zumindest eine Ecke mit einem Krümmungsradius in der Ebene des Bodens von ca. 1,0 mm aufweisen.

11. Keramische Zahnspange (10) nach Anspruch 1, worin der Boden eine Anzahl Teilchen mit Scherben von Keramikmaterial aufweist.

12. Keramische Zahnspange (10) nach Anspruch 1, worin die Schwächelinie eine zerbrechliche Bahn umfasst.

13. Keramische Zahnspange (10) nach Anspruch 12, worin die zerbrechliche Bahn einen Abschnitt mit einer Dicke in fazialer Richtung im Bereich von ca. 0,36 mm bis ca. 0,66 aufweist.

14. Keramische Zahnspange (10) nach Anspruch 12, worin die zerbrechliche Bahn eine Dicke in fazialer Richtung von weniger als ca. 0,66 mm aufweist.

15. Keramische Zahnspange (10) nach Anspruch 1, worin die Spange polykristallines durchscheinendes Aluminiumoxid mit einer durchschnittlichen Korngröße von höchstens 1,0 Mikron umfasst.

## Revendications

1. Bracket orthodontique en céramique (10) comportant :
une section mésiale (12) ;
une section distale (14), la section mésiale et la section distale comprenant chacune une surface externe (16, 18), et la surface externe (16, 18) de la section mésiale (12) et la section distale présentant ensemble une base (20) pour lier le bracket à une dent ;
une encoche pour arc orthodontique (22) s'étendant le long de la section mésiale (12) et la section distale (14) dans un sens généralement mésio-distal ;
un canal allongé (34) s'étendant dans un sens généralement occlus-gingival entre la section mésiale (12) et la section distale (14), le canal (34) ayant une profondeur dans un sens lingual qui est supérieure à la profondeur linguale de l'encoche pour arc orthodontique ;
une ligne de faiblesse s'étendant entre la section mésiale (12) et la section distale (14) lingualement par rapport au canal et s'étendant sur toute la longueur du canal (34), la ligne de faiblesse permettant au bracket d'être détaché d'une dent par pivotement de la section mésiale (12) et la section distale (14) autour d'un axe de référence s'étendant de manière générale parallèlement à l'axe longitudinal du canal ; et
un renfoncement (48) s'étendant entre la surface externe (16, 18) de la section mésiale (12) et la section distale de manière générale parallèlement au canal, le renfoncement (48) ayant une surface inférieure qui est espacée dans un sens facial des régions adjacentes de la surface externe de la section mésiale et de la section distale,
**caractérisé en ce que** la base (20) a une largeur globale dans un sens mésio-distal et une hauteur globale dans un sens occlus-gingival, et **en ce que** le rapport largeur globale/hauteur globale est inférieur à environ 0,95.

2. Bracket orthodontique en céramique (10) selon la revendication 1, dans lequel le rapport largeur globale/hauteur globale est inférieur à environ 0,90.

3. Bracket orthodontique en céramique (10) selon la revendication 1, dans lequel la largeur globale est inférieure à environ 3,6 mm.

4. Bracket orthodontique en céramique (10) selon la revendication 1, dans lequel la section mésiale (12) et la section distale (14) comprennent chacune une paire d'ailettes d'attache ayant une hauteur globale dans un sens occlus-gingival qui n'est pas supérieure à la hauteur globale de la base dans un sens occlus-gingival.

5. Bracket orthodontique en céramique (10) selon la revendication 1, dans lequel le canal (34) a des configurations transversales en forme générale de V dans des plans de référence perpendiculaires à son axe longitudinal.

6. Bracket orthodontique en céramique (10) selon la revendication 5, dans lequel le canal (34) comprend une surface inférieure dont le rayon de courbure est de l'ordre d'environ 0,1 mm à environ 0,15 mm.

7. Bracket orthodontique en céramique (10) selon la revendication 1, dans lequel le renfoncement (48) a un axe longitudinal et une configuration transversale générale semi-circulaire dans des plans de référence perpendiculaires à son axe longitudinal.

8. Bracket orthodontique en céramique (10) selon la revendication 1, dans lequel le bracket comprend en outre une fixation mésiale (42) reliée à la section mésiale (12) et une fixation distale (44) reliée à la section distale, la fixation mésiale (42) et la fixation distale (44) pouvant être utilisées pour retenir de manière libérable un arc orthodontique dans l'encoche à cet effet (22).

9. Bracket orthodontique en céramique (10) selon la revendication 1, dans lequel le bracket comprend en outre un pilier mésial (38) qui s'étend vers l'extérieur depuis la section mésiale dans un sens généralement mésial, un pilier distal (40) qui s'étend vers l'extérieur depuis la section distale dans un sens généralement distal, une fixation mésiale (42) reliée au pilier mésial et une fixation distale (44) reliée au pilier distal, la fixation mésiale (42) et la fixation distale (44) retenant de manière libérable un arc orthodontique dans l'encoche à cet effet (22).

10. Bracket orthodontique en céramique (10) selon la revendication 1, dans lequel la surface externe de la section mésiale (12) et celle de la section distale (14) comprennent chacune au moins un coin dont le rayon de courbure dans le plan de la base est d'environ 1,0 mm.

11. Bracket orthodontique en céramique (10) selon la revendication 1, dans lequel la base comprend un certain nombre de particules comprenant des fragments de céramique.

12. Bracket orthodontique en céramique (10) selon la revendication 1, dans lequel la ligne de faiblesse comprend une bande cassable.

13. Bracket orthodontique en céramique (10) selon la revendication 12, dans lequel la bande cassable comprend une portion dont l'épaisseur dans un sens facial se situe entre environ 0,36 mm et environ 0,66 mm.

14. Bracket orthodontique en céramique (10) selon la revendication 12, dans lequel la bande cassable a une épaisseur dans un sens facial qui est inférieure à environ 0,66 mm.

15. Bracket orthodontique en céramique (10) selon la revendication 1, dans lequel le bracket comporte de l'oxyde d'aluminium translucide polycristallin ayant une taille moyenne de grain ne dépassant pas environ 1,0 micron.
